Europäisches Patentamt

European Patent Office

Office européen des brevets

(11) Publication number: 0 344 668
A2

# EUROPEAN PATENT APPLICATION

(21) Application number: 89109603.4

(51) Int. Cl.⁴: B60C 15/00

(22) Date of filing: 27.05.89

(30) Priority: 03.06.88 JP 135559/88

(43) Date of publication of application:
06.12.89 Bulletin 89/49

(84) Designated Contracting States:
DE FR

(71) Applicant: THE YOKOHAMA RUBBER CO., LTD.
36-11, Shimbashi 5-chome Minato-ku
Tokyo, 105(JP)

(72) Inventor: Inazawa, Koji
7-28, Sakuradai 4-chome
Isehara-shi Kanagawa-ken(JP)

(74) Representative: Weber, Dieter, Dr. et al
Dr. Dieter Weber und Dipl.-Phys. Klaus
Seiffert Patentanwälte
Gustav-Freytag-Strasse 25 Postfach 6145
D-6200 Wiesbaden 1(DE)

(54) Pneumatic radial tire.

(57) A pneumatic radial tire having an angle of at least 80° between a straight line extending in the direction of the axis of rotation of the tire at the height position corresponding to a flange height from the bead heel corresponding to the diametral end of a rim and the tangent line of a carcass at the point at which the above straight line crosses the inner surface of the carcass.

Fig.1

EP 0 344 668 A2

## PNEUMATIC RADIAL TIRE

The present invention relates to a pneumatic radial tire improved in that the tendency of its bead portion to undergo a deformation against a rim flange in service of the tire is suppressed and also in that the bead portion is prevented from being subjected to a rim cut.

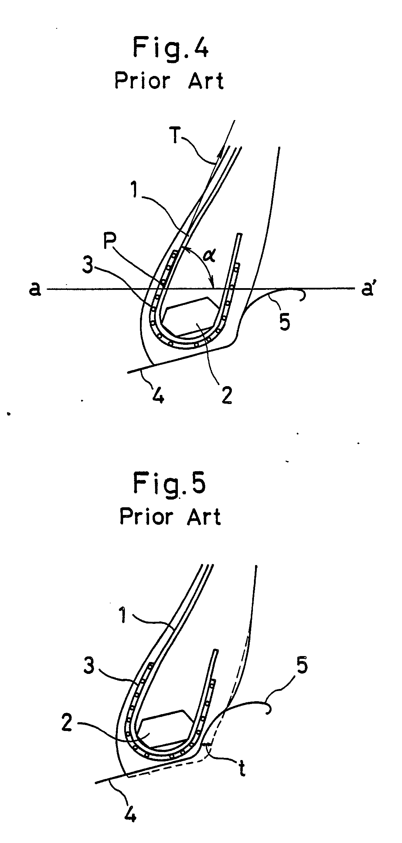

Conventional pneumatic radial tires have a bead portion structured for example as illustrated in Fig. 4 of the accompanying drawings, and as shown therein, in the bead portion an end portion of a cacass 1 comprising steel cords is turned back in a manner of surrounding a bead core from the inner side to the outer side of the tire. In Fig. 4, further, the reference numeral 3 denotes a chafer applied about the carcass 1 and the numeral 4 shows a rim (having a taper of $15°$) having a rim flange 5.

In the cases of radial tires, particularly heavy duty tubeless radial tires, the bead portion of which is structured as above, when they are put to service for some time, this part of the bead portion which contacts the rim flange 5 tends to undergo a deformation as shown in Fig. 5, in which the broken lines and the solid lines respectively show an original profile of the bead portion of a tire before the tire is put to service and a deformed profile of the bead portion after the tire has experienced service. In In addition or alternative to this, the bead portion tends to suffer from the generation of a crack which is generally referred to as a rim cut (not shown). In the condition shown in Fig. 5, the bead portion has undergone a deformation of an amount of t (mm).

In the prior art, attempts have already been made to give solution to the above indicated problems by variously modifying the profile of the bead portion and/or by improving the rubber compound for the bead portion, but no satisfactory result has yet been provided.

Accordingly, the present invention aims at providing a pneumatic radial tire of which the tendency of its bead portion to undergo deformation as a result of its contact with a rim flange in service of the tire is suppressed and/or the bead portion is prevented from receiving a rim cut also in service of the tire, by means of particularly arranging a carcass in the bead portion.

To attain such object, the invention provides a pneumatic radial tire which includes a bead portion in whcih an end portion of a carcass comprising steel cords and composed of at least a single layer is turned back surrounding a head core from the inner side to the outer side of the tire, which tire is characterized in that there is an angle $\alpha$ of at least $80°$ set between an imaginable straight line a-a' extending in the direction of the axis of rotation of the tire, at the height position corresponding to a flange height h from the bead heel that corresponds to the diametral end of a rim and the tangent line of the carcass at the point P at which the straight line a-a' crosses the inner surface of the carcass.

Such present invention will now be described in greater detail in connection with an embodiment thereof with reference to the accompanying drawings, in which:

Fig. 1 is a partial view in section in the meridian direction of a pneumatic radial tire embodying the present invention, showing the bead portion of the tire in particular;

Fig. 2 shows a view, taken for illustration of the relationship determined between carcass lines and carcass tensions;

Fig. 3 is a view, showing the relationship between the angle $\alpha$ and the about t (mm) of deformation of the bead portion;

Fig. 4 is a same meridian sectional partial view as Fig. 1 but shows the bead portion of a conventional pneumatic radial tire before it is put to service; and

Fig. 5 shows a same view as Fig. 4 but is taken after the tire of Fig. 4 was put to service.

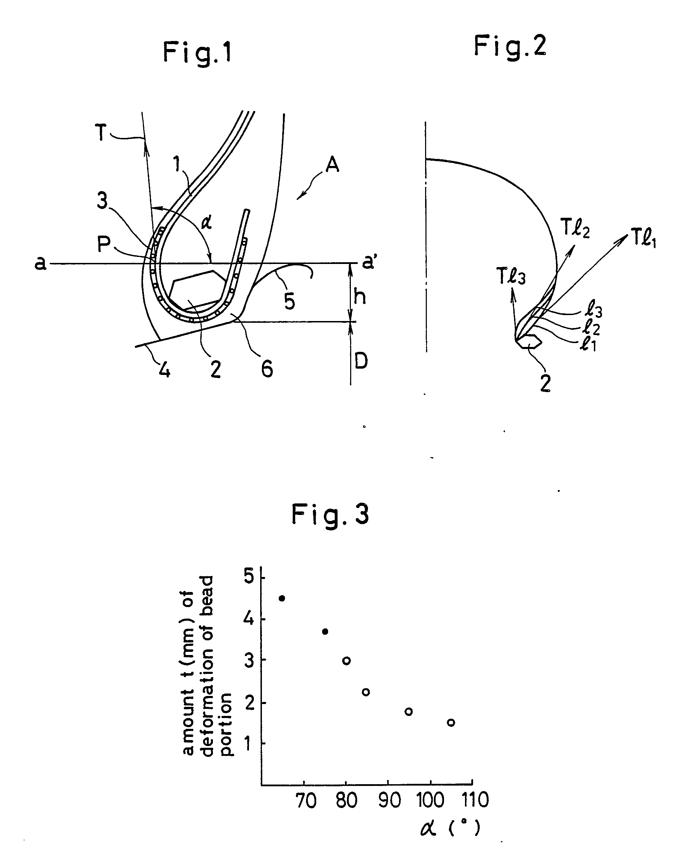

In the bead portion indicated at A in Fig. 1, an end portion of a carcass 1 comprising steel cords and composed of at least one layer is turned back in a manner of surrounding a bead core 2 from the inner side to the outer side of the tire, forming a turnup portion. The carcass 1 may comprise a single layer or a plurality of layers. The rim shown by 4 has a taper, namely an angle of inclination relative to the direction of the axis of rotation of the tire, of $15°$. Further, the tire constituting parts of members and locational points identical with those in Fig. 4 and 5 are shown by identical reference numerals and characters in Fig. 1.

Now, a straight line a-a' which extends parallel to the axis of rotation of the tire may be depicted in imagination, at the height position corresponding to a flange height h from the bead heel that corresponds to the end of the diameter D of the rim 4. This straight line a-a' crosses, at a point P, the inner surface of the carcass 1 or of an innermost layer thereof (the surface of the carcass on the side of the tire in which the tire is filled with air). According to the present invention, it is arranged that the tangent T of the carcass at the point P has an angle $\alpha$ of at least $80°$ to the above imaginable straight line a-a'. The angle $\alpha$ is determined based on the sectional shape of the bead portion A in the meridian direction of the tire in the condition of the tire in which it is filled with air to obtain the prescribed inflation pressure that is specified differently for different tires but is not applied with a load. If the angle $\alpha$ is smaller than $80°$, then it is impossible to suppress the deformation of the bead portion A likely after the tire is put to service due to the contact of the bead portion with the rim flange 5. Preferably, the angle $\alpha$ is 80 to $110°$ ($80° \leq \alpha \leq 110°$). In this connection, with the conventional pneumatic radial tire shown in Fig. 4, the angle $\alpha$ in the bead portion is on the order of 60 to $75°$.

The present invention will be described in further detail with reference to an experimental example below.

Example:

Fig. 2 shows three different carcass lines $\ell_1$, $\ell_2$ and $\ell_3$, of which $\ell_1$ is an equilibrium carcass line, $\ell_2$ is a carcass line representing conventional tires and $\ell_3$ is a carcass line representing tires according to the present invention. In the cases of the carcass lines $\ell_1$, $\ell_2$ and $\ell_3$, carcass tensions $T\ell_1$, $T\ell_2$ and $T\ell_3$ are exerted, respectively, among which the tension $T\ell_1$ in the case of the equilibrium carcass line $\ell_1$ is highest, and as the carcass line increasingly deviates from the equilibrium carcass line $\ell_1$, the tension is accordingly reduced with an increasingly great compressive force exerted: Hence, $T\ell_1 > T\ell_2 > T\ell_3$.

To determine how the amount t (mm) of deformation of the bead portion after tires were put to service would change when the carcass tension was increasingly reduced, that is, when the angle $\alpha$ in Fig. 1 was set increasingly large, tests were conducted under the below cited conditions, to obtain results as shown in Fig. 3.

| Test Conditions: | | |
|---|---|---|
| Tire Size | : | 11R22.5 14PR |
| Rim | : | 8.25 x 22.5 |
| Inflation Pressure | : | 7.0 kg/cm² |
| Load | : | 3820 kg/cm² |
| Velocity | : | 45 km/hr |
| Distance Run | : | 20000 km |

Further, the amount of deformation t (mm) was determined by comparing the profile of each tire after the running test with that of the same tire before running, the profile being obtained by cutting the tire in the radial direction, wherein tires of which the bead core did not undergo deformation were taken as samples for the determination.

As clearly seen with reference to Fig. 3, tires of which the angle $\alpha$ is smaller than $80°$ undergoes a relatively large amount of deformation (exceeding 3 mm), while tires of which the angle $\alpha$ is $80°$ or greater, the amount of deformation is limited. Further, in Fig. 3, the the black dot mark (●) represents conventional tires, and the circle mark (○), tires according to the present invention. As hereinbefore stated, the angle $\alpha$ should preferably by 80 to $110°$. Where the angle $\alpha$ exceeds $110°$ ($\alpha > 110°$), tires are prone to undergo thermal difficulties, and such a large angle $\alpha$ is not desirable from the viewpoint of obtaining a desirable tire durability.

Determinations were also made of the generation of a rim cut in the tires to find that where tires had an angle $\alpha$ smaller than $80°$, a crack was generated in this part of the bead portion which contacted the rim flange, but the generation of a crack did not take place where tires had an angle $\alpha$ of $80°$ or more.

As described above, according to the present invention it is defined that the angle $\alpha$ is at least $80°$, whereby it is possible to suppress the tendency of the bead portion to undergo deformation and/or to prevent the bead portion from undergoing a rim cut. The present invention is particularly advantageously applicable to heavy duty tubeless radial tires.

**Claims**

1. A pneumatic radial tire which includes a bead portion in which an end portion of a carcass comprising steel cords and composed of at least a single layer is turned back surrounding a bead core from the inner side to the outer side of the tire, which tire is characterized in that there is an angle $\alpha$ of at least $80°$ set between a straight line a-a' in the direction of the axis of rotation of the tire, at the height

3

position corresponding to a flange height h from the bead heel that corresponds to the diametral end of a rim and the tangent of the carcass at the point P at which the straight line a-a' crosses the inner surface of the carcass.

2. The pneumatic radial tire as claimed in claim 1, wherein said angle $\alpha$ is 80 to $110°$.

3. The pneumatic radial tire as claimed in claim 1, which is a heavy duty tubeless radial tire.

4

# Fig.1

# Fig.2

# Fig.3

## Fig.4
### Prior Art

## Fig.5
### Prior Art